# EUROPEAN PATENT SPECIFICATION

(11) **EP 3 061 690 B1**
(45) Date of publication and mention of the grant of the patent: **01.08.2018**
(21) Application number: 15382074.1
(22) Date of filing: 24.02.2015
(51) Int. Cl.: B64D 9/00

(54) **AIR DELIVERY LOCK AND SYSTEM**
FRACHTSCHLOSS UND SYSTEM
SYSTEME DE VERROUILLAGE DE FRET

(43) Date of publication of application: 31.08.2016
(73) Proprietor: Airbus Defence and Space, S.A., 28906 Getafe (Madrid) (ES)
(72) Inventor: Doblas Espinosa, Alberto, 28906 Getafe (ES); Martinez Elkington, Manuel, 28906 Getafe (ES)
(74) Representative: Elzaburu S.L.P.

(56) References cited:
- US-A- 4 349 168
- US-A- 4 372 715
- US-A- 4 375 932
- US-A- 4 461 437

## Description

### FIELD OF THE INVENTION

The present invention refers to a lock for blocking pallets located in the longitudinal axis of an aircraft and for automatically allowing them to be delivered when required. The invention also refers to the restraint system that comprises said air delivery lock.

### BACKGROUND OF THE INVENTION

As it is known, cargo drops by parachute from aircraft have been extensively employed in military operations and disaster relief situations. In the usual parachute cargo delivery system, loaded platforms or unit load devices (ULD) are guided for movement along the longitudinal axis of the aircraft between parallel rails secured to the aircraft floor. They can be pulled backwardly out of a rear cargo receiving and delivery opening by means of a parachute. Desirably, such cargo aircraft must also be capable of discharging cargo onto the ground as the aircraft accelerates over the ground surface.

Cargo within the aircraft is carried on said unit load devices, for instance, pallets or platforms, which are adapted to travel backwardly on restraining guideways or tracks. Cargo can be discharged from the aircraft with the ramp in the open position by causing a parachute, attached to the cargo on each unit load device, to be released into the slip stream below and behind the aircraft. Before the parachute deploys and expands to its full drag and load suspension area, the cargo on each unit load device should be restrained and prevented from movement. However, once a predetermined drag force of the parachute is exerted on the cargo, it should "break away" from the guide rails such that it can move backwardly through the opening. This mode of operation is referred to as aerial delivery mode.

On the other hand, it is sometimes desirable or necessary to unload the cargo on the unit load device while the aircraft is taxiing on the ground and accelerating. In this mode, called release mode, the unit load devices are restrained against forward movement but must be free to move aft of the aircraft.

In still another mode of operation, referred to as the locked mode, the unit load devices are locked to the guide rails during normal flight of the aircraft and can move neither move forward nor aft.

Therefore, the main function of an air delivery lock is to provide the above different modes from locking to releasing of the cargo in a reliable way. Locks are integrated in a system installed into the aircraft floor structure. US 4461437 discloses a cargo lock for aircraft cargo, in which, when locked, an over-center toggle device prevents releasing movement of a toggle detent and a positive locking cam retains the toggle device in locking position. Known air delivery locks of the state of the art include the following four main modes of operation:
- Locked. The cargo is restrained for moving in the longitudinal axis of the aircraft, both in aft and forward directions, and the air delivery lock will not release the unit load device at any load. It provides full longitudinal restraint to the cargo unit load devices.
- Unlocked. The cargo is free to move in the longitudinal axis of the aircraft, both in aft and forward directions. This mode is used during the loading and/or off-loading of the cargo into the aircraft.
- Armed mode. The cargo is locked in the forward direction but it is able to unlock automatically in aft direction if the load applied by the cargo exceeds a trigger value. This mode is suitable as aerial delivery system lock, that is to say, those which permit only aft movement of a pallet under the force exerted by a parachute.
- Released. The cargo is restrained only in forward direction. This mode is used for aerial delivery by gravity drop and combat offload. In this mode, the lock provides minimal restraint in the aft direction.

Known restraint system comprises a pair of parallel guide rails for carrying the unit load devices extending longitudinally along the floor of the aircraft which has a rear receiving and delivery opening. At least one of said rails is provided with the air delivery locking mechanism at spaced points therealong the rail. Known locking mechanism are provided with means for releasable engaging the unit load device to hold it in position along the guide rails, and cam means for each of said locking mechanisms simultaneously movable along said single rail. The cam means have a first position where said engaging means will release said unit load device for movement aft of the aircraft but not forward of the aircraft, a second position where said engaging means will prevent either forward or aft movement of a the unit load device and a third position where the engaging means will prevent forward movement of a pallet but will permit aft movement of the pallet by movement of said engaging means into a release position against the restraining force of a deformable piece.

Air delivery locks are subjected to high loads mainly due to the cargo and the force exerted by parachutes. Moreover they incorporate a high number of pieces to perform their duty. Known air delivery locks are able to perform only a limited number of deliveries as they break down due to the heavy-duty conditions they are subjected to.

It is therefore an object of the present invention to provide an air delivery lock reliable, simple and robust.

### SUMMARY OF THE INVENTION

The air delivery lock object of the invention is suitable for automatically locking or releasing a cargo located in the aircraft. It comprises an engaging means which is movable between an extended position in which is able to restrain the cargo and a hidden position in which it is not able to restrain said cargo therefore releasing it.

As the cargo is usually located on unit load devices, the lock object of the invention would preferably engage said unit load devices being able of automatically releasing the unit load device and hence the cargo attached to said unit.

The lock further comprises:
- a cradle pivotably movable around a cradle rotation axis located at the proximity of the central portion of the cradle, the engaging means being pivotably joined to the cradle at one end of the cradle around an engaging means rotation axis,
- first elastic means extending between the other end of the cradle and the engaging means, the engaging means, the cradle and the first elastic means being configured such that when the engaging means are pivotally moved with respect to the cradle towards a hidden position, the first elastic means are compressed,
- an overcenter mechanism joined to the cradle at one end of the overcenter mechanism, the engaging means, the cradle, the first elastic means and the overcenter mechanism configured such that when the engaging means receive a force over a compression threshold value of the first elastic means, the engaging means push the overcenter mechanism which moves from a first position in which the cradle maintains the engaging means in an extended position, to a second position in which the cradle pulls the engaging means to a hidden position releasing the cargo.

One of the advantages of the present invention is that the overcenter mechanism provides a fast releasing and a robust design improving endurance and resistance of the mechanism. It also minimizes the number of components increasing the resistance against vibration.

Another advantage is that it optimises the load path minimising load transfer to weaker mechanisms, because the main load path always passes through the overcenter mechanism allowing other components to be lighter and simpler than in known locking devices. The overcenter supports compression loads when the load is applied in the aft direction of the engaging means, ie, toward the tail and tensile loads when force is applied in the forward direction of the engaging means, but the overcenter is always in the main load path.

Finally the claimed lock provides a pure mechanical actuation not needing any power supply during its operation.

It is also an object of the present invention a system integrating the previously described lock into the aircraft floor structure, the system comprising:
- a pair of parallel guide rails for carrying unit load devices extendable longitudinally along a floor of an aircraft,
- an air delivery lock according to the preceding description located in at least one of the rails.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a plan schematic view showing an embodiment of a locking system located in the floor of an aircraft.
Figure 2 shows a cross lateral view of the main components of an embodiment of the lock in a locked mode.
Figure 3 shows a perspective view of an embodiment of the overcenter mechanism.
Figure 4 shows a cross section of Figure 3.
Figure 5 shows a cross lateral view of the main components of an embodiment of the air delivery lock in an armed mode in a latched position.
Figure 6 shows a cross lateral view of the main components of an embodiment in the released mode.
Figure 7 shows a cross lateral view of the main components of the embodiment in an unlocked mode.

### DETAILED DESCRIPTION OF THE INVENTION

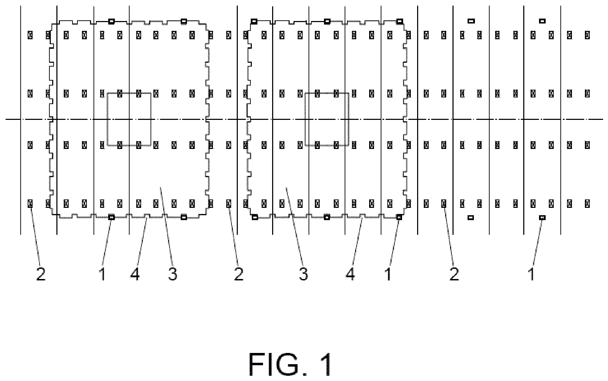

Figure 1 discloses an embodiment of a lock system, the figure shows two unit load devices (3) for supporting the cargo, rollers (2) on which the unit load devices (3) can move and several locking mechanisms (1) located into recesses (4) of the unit load devices (3).

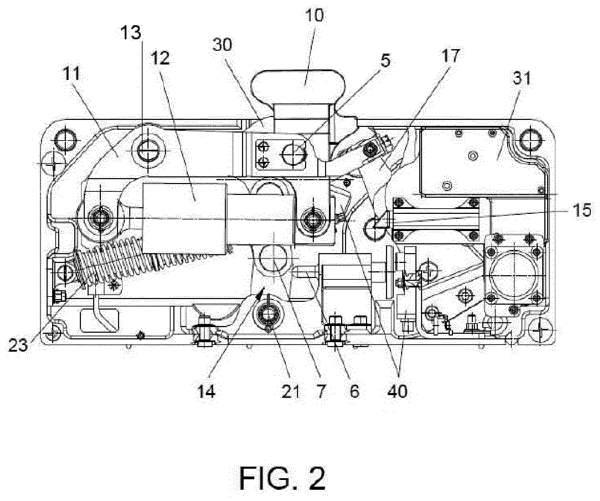

Figures 2 to 7 show an embodiment of the air delivery lock (1) for a cargo located in an aircraft, showing:
- the engaging means (10), more specifically a detent (10) which moves around a detent rotation axis (5),
- the cradle (11) pivotably movable with respect to a cradle rotation axis (13) and the detent (10) being pivotably joined to the cradle (11) at one end,
- first elastic means (12) which corresponds with a spring extending between the other end of the cradle (11) and the detent (10),
- the overcenter mechanism (14).

Particularly, the elastic means (12) disclosed in the embodiment comprise a friction spring having outer and inner friction rings with tapered contact surfaces that dissipate energy as heat and minimize the impact of the release of the cargo.

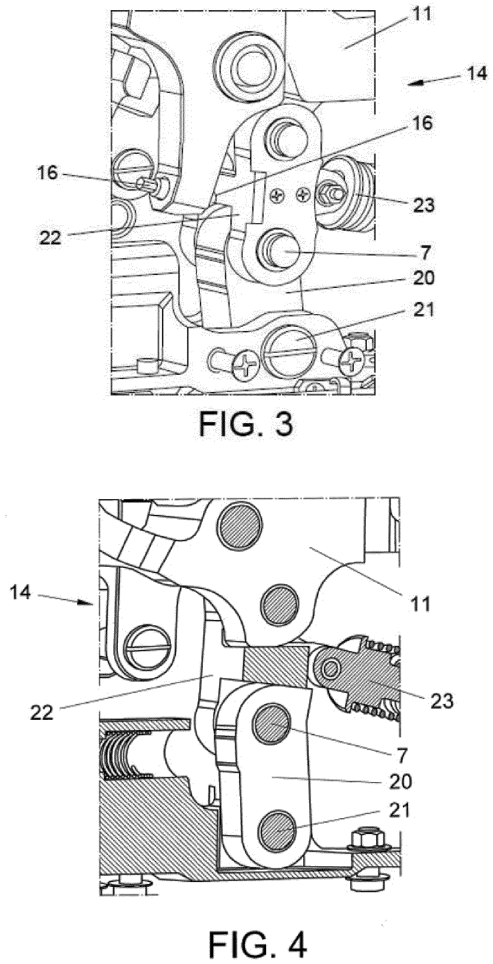

Figures 3 and 4 show an embodiment of the overcenter (14). The overcenter (14) comprises the followings elements:
- a first overcenter link (20) rotatably joined to a fixed point (21) at one end, and
- a second overcenter link (22) rotatably joined to the first overcenter link (20) at the other end of the first overcenter link (20) and rotatably joined to the cradle (11), being the first and the second overcenter links (20, 22) pivotally movable around a link axis (7).

Additionally the overcenter (14) is joined to an elastic recovery element (23) which is particularly joined to the second overcenter link (22). The elastic recovery element (23) pushes the overcenter (14) towards an armed position.

More specifically, the second overcenter link (22) comprises two wings locating the first overcenter link (20) in between.

In the armed mode when the parachute is opened, the force exerted on the detent (10) in the aft direction is increased. The detent (10) pivots around its detent rotation axis (5) compressing the first elastic means (12) until the lower part of the detent (10) contacts the overcenter (14). As the load increases, the first elastic means (12) compresses and the detent (10) rotates around its detent rotation axis (5), but the cradle (11) remains in place because the overcenter mechanism (14) is in a clamped position as this is a stable condition of the overcenter mechanism (14).

The detent (10) comprises a detent pusher (16) for pushing the overcenter mechanism (14), the detent pusher (16) is movable with respect to the detent (10) such that its position relative to the detent (10) can be adjusted, therefore the force necessary to reach the contact between detent (10) and overcenter mechanism (14) can be manually adjusted that allows to change the range of rotation of the detent (10) to reach this contact point.

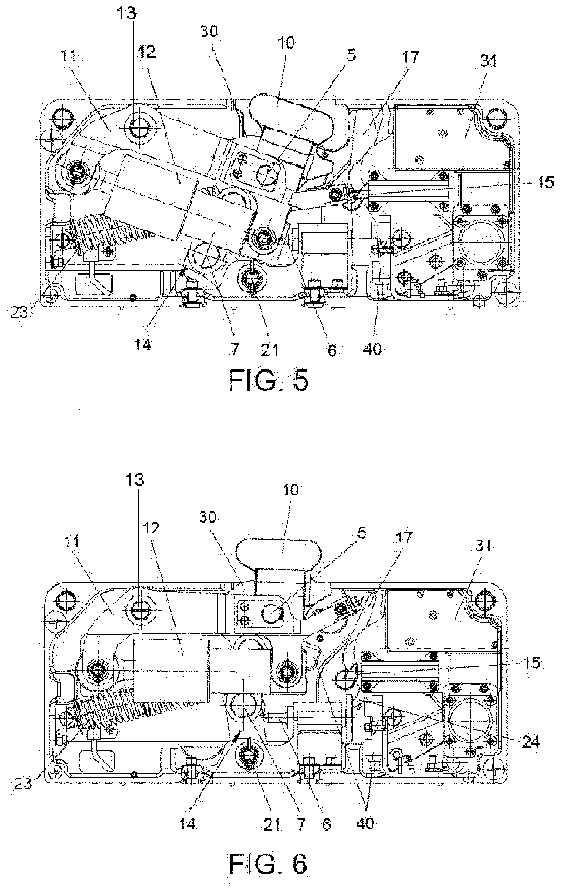

When the detent pusher (16) contacts the overcenter (14), an increment into the force applied on the detent (10), will break the overcenter mechanism (14), see Figure 5, hiding the detent (10) inside a housing.

The delivery lock (1) also comprises a latching (15) for locking the cradle movement (11) backwards, i.e., towards the extended position of the detent (10) once the engaging means (10) are hidden.The delivery lock (1) remains in detent (10)-down position until the released configuration is selected. This internal state has the advantage of not having to repeat the same unlocking procedure for the rest of unit load devices (3) still remaining in the cargo hold which are released afterwards.

In detent (10)-down position and latched (15) down the unit load devices (3) are free to move in the forward and aft direction without restrictions.

In the locked mode, see Figure 2, with the detent (10)-up position, the detent (10)/cradle (11) combination results in a stable mechanism when forward forces are applied, ensuring the delivery lock (1) never unlocks regardless of the value of the force applied.

The claimed device comprises a locking mechanism (17), as shown in Figure 2, for locking the pivoting movement of the detent (10) around its rotation axis (5) in the locked mode, therefore the detent (10) is allowed to pivot until it contacts the locking mechanism (17). Additionally, the longitudinal direction tolerance will be accommodated by the detent (10) rotating about its pivot, which causes compression of the first elastic mean (12). Said locking mechanism (17) is operated by an electromechanical actuator (31).

The released mode of the equipment allows the unit load devices (3) to move easily in the aft direction by applying a minimal force to overcome the recovery element (23) and internal frictions. No movement of the unit load devices (3) is allowed in forward direction in detent (10)-up position.

The embodiment shown further comprises a pusher (6) for pushing the overcenter mechanism (14) from a first position in which the overcenter mechanism (14) is clamped to a second position in which the overcenter mechanism (14) is un-clamped and the cradle (11) can be rotated around the cradle axis (13).

The pusher (6) pushes the overcenter (14) close to the linkage of the first and the second link (20, 22) and in consequence only a small force has to be exerted to move the overcenter mechanism (14) from the first to the second position.

The released mode is similar to the armed mode with the main difference that the pusher (6) is operated for breaking the overcenter mechanism (14). More specifically the embodiment shown in the figures comprises an extension arm (24) of the locking mechanism (17), which moves the pusher (6) against the overcenter mechanism (14) which breaks the stable position of the overcenter links. This ensures the detent (10) can move from detent (10)-up to detent (10)-down with small aft forces, only internal frictions and the force of the recovery element (23) oppose to this movement.

An additional feature of this mode of operation is that the locking of the mechanism in detent (10)-down position is prevented by pulling back the latch (15) in the latching mechanism.

The detent (10)/cradle (11) configurations result in a stable mechanism when forward forces are applied and the air lock (1) is detent (10)-up, ensuring the air lock (1) never unlocks regardless of the value of the force applied. In this configuration the detent (10)-down position is not stable (the latch (15) is removed) and therefore the unit load devices (3) are not free to move in the forward direction.

As in the release mode the lock (1) is only supported by the recovery element (23), if the force of the cargo is enough to overcome the compression force of the recovery element (23), the detent (10) will be hidden from the path of the unit load device (3) which will be free to move in the aft direction. However, the equipment provides full restriction in forward direction because the cradle (11) comprises a stop (30) for the detent (10) in the forward direction.

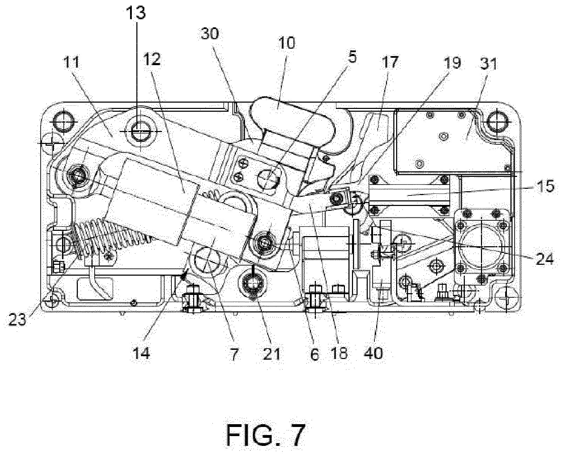

In the unlocked mode, as shown in Figure 7, the detent (10) is fully hidden, and no forward or aft restrain is provided to the unit load device (3). For this purpose the cradle (11) comprises an extension (18) which can be pushed by a cradle lock (19) of the cradle (11) such that the detent (10) is hidden by pulling from the cradle (11).

Previously, the pusher (6) for pushing the overcenter mechanism (14) moves the overcenter mechanism (14) to the un-clamped position such that the cradle (11) can be rotated around the cradle axis (13).

The cradle lock (19) of the cradle (11) is also operated by the electromechanical actuator (31).

The unlocked configuration of the equipment allows free movements of the unit load devices (3) in the aft and forward direction. This condition is configured when the unlocked mode is selected.

Starting from the released configuration, where the detent (10) is free to move up and down, the electromechnical actuator (31) continues its movement until the cradle lock (19) catches the cradle (11) moving the detent (10) to the detent (10)-down position and particularly pulls it inside the housing. This position is maintained by the electromechanical actuator (31), which stops once the detent (10)-down position is reached.

The mode selection could be operated electrically or manually, more specifically in the disclosed embodiment the functioning modes are operated by the electromechanical actuator (31).

The lock (1) also includes monitor means (40) for monitoring the mode of the equipment electronically at any time as for instance proximity sensors or micro switches.

It also includes a visual indicator located in the rear part of the lock for checking the mode of the equipment by the load master and manual drive to change the mode of the equipment in case of electrical supply failure.

## Claims

1. Air delivery lock (1) for a cargo located in an aircraft, comprising:
- engaging means (10) movable between an extended position in which they are able to restrain the cargo and a hidden position in which they are not able to restrain said cargo,
a first elastic means (12) and an overcenter mechanism (14), **characterised in that** it further comprises:
- a cradle (11) pivotably movable around a cradle rotation axis (13) located at the proximity of the central portion of the cradle (11), the engaging means (10) being pivotably joined to the cradle (11) at one end of the cradle (11) around a engaging means rotation axis (5),
- the first elastic means (12) extending between the other end of the cradle (11) and the engaging means (10), the engaging means (10), the cradle (11) and the first elastic means (12) being configured such that when the engaging means (10) are pivotally moved with respect to the cradle (11) towards a hidden position, the first elastic means (12) are compressed,
- the overcenter mechanism (14) joined to the cradle (11) at one end of the overcenter mechanism (14), the engaging means (10), the cradle (11), the first elastic means (12) and the overcenter mechanism (14) configured such that when the engaging means (10) receive a force over a compression threshold value of the first elastic means (12), the engaging means (10) push the overcenter mechanism (14) which moves from a first position in which the cradle (11) maintains the engaging means (10) in an extended position, to a second position in which the cradle (11) pulls the engaging means (10) to a hidden position for releasing the cargo.

2. Air delivery lock (1) according to claim 1 wherein the overcenter mechanism (14) comprises:
- a first overcenter link (20) rotatably joined to a fixed point (21) at one end,
- a second overcenter link (22) rotatably joined to the first overcenter link (20) at the other end of the first overcenter link (20) and rotatably joined to the cradle (11) being the first and the second overcenter links (20, 22) pivotably movable around a link axis (7).

3. Air delivery lock (1) according to claim 2 wherein the overcenter mechanism (14) is further joined to a recovery elastic means (23).

4. Air delivery lock (1) according to claim 3 wherein the recovery elastic means (23) are joined to the second overcenter link (22).

5. Air delivery lock (1) according to any preceding claim 2 to 4 wherein the second overcenter link (22) comprises two wings being the first overcenter link (20) located in between.

6. Air delivery lock (1) according to any preceding claim wherein it comprises a latching mechanism (15) for locking the cradle (11) movement backwards towards an extended position of the engaging means (10) once the engaging means (10) in a hidden position.

7. Air delivery lock (1) according to any preceding claim wherein the engaging means (10) comprise a detent pusher (16) for pushing the overcenter mechanism (14), the detent pusher (16) being movable with respect to the engaging means (10) such that its position relative to the engaging means (10) can be adjusted.

8. Air delivery lock (1) according to any preceding claim wherein it comprises a locking mechanism (17) for locking the pivoting movement of the engaging means (10) around the engaging means rotation axis (5).

9. Air delivery lock (1) according to any preceding claim wherein the cradle (11) comprises an extension (18) able to contact a cradle lock (19) for pushing the extension (18) of the cradle (11) such that the engaging means (10) are hidden.

10. Air delivery lock (1) according to any preceding claim wherein the cradle (11) comprises a stop (30) for the engaging means (10) in the forward direction.

11. Air delivery lock (1) according to any preceding claim wherein it comprises a pusher (6) for pushing the overcenter mechanism (14) from a first position in which the overcenter mechanism (14) is clamped to a second position in which the overcenter mechanism (14) is un-clamped.

12. Air delivery lock (1) according to claim 2 and 11 wherein the pusher (6) actuates close to the linkage of the first and the second link (20, 22).

13. Air delivery lock (1) according to any preceding claim wherein it comprises an electromechanical actuator (31) for operating the different functioning modes.

14. Air delivery lock (1) according to claim 13 wherein the electromechanical actuator (31) operates the locking means (17) for a locked mode, the pusher (6) for a unlocked mode the cradle lock (19) and the pusher (6) for a release mode of the air delivery lock (1).

15. Air delivery lock (1) according to any preceding claim wherein the engaging means (10) are a detent.

16. Air locking system, **characterised in that** it comprises:
- a pair of parallel guide rails for carrying unit load devices (3) extendable longitudinally along a floor of an aircraft,
- an air delivery lock (1) according to any preceding claim located in at least one of the rails.

## Patentansprüche

1. Frachtschloss (1) für ein Frachtgut, welches sich in einem Luftfahrzeug befindet, das umfasst:
- Eingreifeinrichtungen (10), die zwischen einer ausgefahrenen Position, in der sie in der Lage sind, das Frachtgut festzuhalten, und einer eingefahrenen Position, in der sie nicht in der Lage sind, das Frachtgut festzuhalten, bewegbar sind,
- eine erste elastische Einrichtung (12) und einen Übertotpunkt-Mechanismus (14),
**dadurch gekennzeichnet, dass** sie ferner umfasst:
- eine Aufnahmevorrichtung (11), die um eine Aufnahmevorrichtungs-Drehachse (13), welche sich in der Nähe des zentralen Abschnitts der Aufnahmevorrichtung (11) befindet, herum schwenkbar bewegbar ist, wobei die Eingreifeinrichtungen (10) an einem Ende der Aufnahmevorrichtung (11) um eine Eingreifvorrichtungs-Drehachse (5) herum schwenkbar mit der Aufnahmevorrichtung (11) verbunden sind,
wobei sich die erste elastische Einrichtung (12) zwischen dem anderen Ende der Aufnahmevorrichtung (11) und den Eingreifeinrichtungen (10) erstreckt, wobei die Eingreifeinrichtungen (10), die Aufnahmevorrichtung (11) und die erste elastische Einrichtung (12) derart ausgeführt sind, dass dann, wenn die Eingreifeinrichtungen (10) relativ zu der Aufnahmevorrichtung (11) schwenkbar in Richtung einer eingefahrenen Position bewegt werden, die erste elastische Einrichtung (12) zusammengedrückt wird,
wobei der Übertotpunkt-Mechanismus (14) an einem Ende des Übertotpunkt-Mechanismus (14) mit der Aufnahmevorrichtung (11) verbunden ist, die Eingreifeinrichtungen (10), die Aufnahmevorrichtung (11), die erste elastische Einrichtung (12) und der Übertotpunkt-Mechanismus (14) derart ausgeführt sind, dass dann, wenn die Eingreifeinrichtungen (10) eine Kraft über einem Zusammendrück-Schwellwert der ersten elastischen Einrichtung (12) aufnehmen, die Eingreifeinrichtungen (10) gegen den Übertotpunkt-Mechanismus (14) drücken, der sich aus einer ersten Position, in der die Aufnahmevorrichtung (11) die Eingreifeinrichtungen (10) in einer ausgefahrenen Position hält, in eine zweite Position, in der die Aufnahmevorrichtung (11) die Eingreifeinrichtungen (10) in eine eingefahrene Position zum Freigeben des Frachtguts zieht, bewegt.

2. Frachtschloss (1) nach Anspruch 1, bei dem der Übertotpunkt-Mechanismus (14) umfasst:
- ein erstes Übertotpunkt-Verbindungsglied (20), das an einem Ende drehbar mit einem Festpunkt (21) verbunden ist,
- ein zweites Übertotpunkt-Verbindungsglied (22), das an dem anderen Ende des ersten Übertotpunkt-Verbindungsglied (20) drehbar mit dem ersten Übertotpunkt-Verbindungsglied (20) verbunden ist und drehbar mit der Aufnahmevorrichtung (11) verbunden ist, wobei das erste und das zweite Übertotpunkt-Verbindungsglied (20, 22) schwenkbar um eine Verbindungsgliedachse (7) herum bewegbar sind.

3. Frachtschloss (1) nach Anspruch 2, bei dem der Übertotpunkt-Mechanismus (14) ferner mit einer elastischen Rückstelleinrichtung (23) verbunden ist.

4. Frachtschloss (1) nach Anspruch 3, bei dem die elastischen Rückstelleinrichtungen (23) mit dem zweiten Übertotpunkt-Verbindungsglied (22) verbunden sind.

5. Frachtschloss (1) nach einem der vorhergehenden Ansprüche 2 bis 4, bei dem das zweite Übertotpunkt-Verbindungsglied (22) zwei Flügel umfasst, wobei sich das erste Übertotpunkt-Verbindungsglied (20) zwischen diesen befindet.

6. Frachtschloss (1) nach einem der vorhergehenden Ansprüche, wobei es einen Verriegelungsmechanismus (15) zum Blockieren der Rückwärtsbewegung der Aufnahmevorrichtung (11) in Richtung einer ausgefahrenen Position der Eingreifeinrichtungen (10), sobald sich die Eingreifeinrichtungen (10) in einer eingefahrenen Position befinden, umfasst.

7. Frachtschloss (1) nach einem der vorhergehenden Ansprüche, bei dem die Eingreifeinrichtungen (10) eine Rastendrückvorrichtung (16) zum Drücken gegen den Übertotpunkt-Mechanismus (14) umfassen, wobei die Rastendrückvorrichtung (16) relativ zu den Eingreifeinrichtungen (10) derart bewegbar ist, dass ihre Position relativ zu den Eingreifeinrichtungen (10) eingestellt werden kann.

8. Frachtschloss (1) nach einem der vorhergehenden Ansprüche, wobei es einen Blockierungsmechanismus (17) zum Blockieren der Schwenkbewegung der Eingreifeinrichtungen (10) um die Eingreifeinrichtungs-Drehachse (5) herum umfasst.

9. Frachtschloss (1) nach einem der vorhergehenden Ansprüche, bei dem die Aufnahmevorrichtung (11) einen Verlängerungsteil (18) aufweist, der in der Lage ist, mit einer Aufnahmevorrichtungsblockierung (19) in Kontakt zu kommen, um das Verlängerungsteil (18) der Aufnahmevorrichtung (11) derart zu drücken, dass die Eingreifeinrichtungen (10) eingefahren sind.

10. Frachtschloss (1) nach einem der vorhergehenden Ansprüche, bei dem die Aufnahmevorrichtung (11) einen Anschlag (30) für die Eingreifeinrichtungen (10) in der Vorwärtsrichtung umfasst.

11. Frachtschloss (1) nach einem der vorhergehenden Ansprüche, wobei es eine Drückvorrichtung (6) zum Drücken des Übertotpunkt-Mechanismus (14) aus einer ersten Position, in der der Übertotpunkt-Mechanismus (14) festgeklemmt ist, in eine zweite Position, in der der Übertotpunkt-Mechanismus (14) nicht festgeklemmt ist, umfasst.

12. Frachtschloss (1) nach Anspruch 2 und 11, bei dem die Drückvorrichtung (6) nahe der Verbindung des ersten und des zweiten Verbindungsglieds (20, 22) eine Betätigung durchführt.

13. Frachtschloss (1) nach einem der vorhergehenden Ansprüche, wobei es einen elektromechanischen Aktuator (31) für die Operation der verschiedenen Funktionsmodi umfasst.

14. Frachtschloss (1) nach Anspruch 13, bei dem der elektromechanische Aktuator (31) die Blockierungseinrichtung (17) für einen Blockierungsmodus, die Drückvorrichtung (6) für einen Entblockungsmodus, die Aufnahmevorrichtungsblockierung (19) und die Drückvorrichtung (6) für einen Freigabemodus des Frachtschlosses (1) betätigt.

15. Frachtschloss (1) nach einem der vorhergehenden Ansprüche, bei dem die Eingreifeinrichtungen (10) eine Raste sind.

16. Frachtschlosssystem, **dadurch gekennzeichnet, dass** es umfasst:
- ein Paar von parallelen Führungsschienen zum Tragen von Unit-Load-Devices (3), die auf einem Boden eines Luftfahrzeugs in Längsrichtung ausfahrbar sind,
- ein Frachtschloss (1) nach einem der vorhergehenden Ansprüche, das sich auf mindestens einer der Schienen befindet.

## Revendications

1. Verrou de décharge par air (1) pour un chargement situé dans un aéronef, comprenant :
- des moyens de prise (10) pouvant être déplacés entre une positon déployée, dans laquelle ils sont en mesure de retenir le chargement, et une position cachée dans laquelle ils ne sont pas en mesure de retenir ledit chargement,
- un premier moyen élastique (12) et un mécanisme à détente brusque (14),
**caractérisé en ce qu'**il comprend en outre :
- un berceau (11) pouvant être déplacé de manière pivotante autour d'un axe (13) de rotation de berceau situé à proximité de la partie centrale du berceau (11), les moyens de prise (10) étant reliés de façon pivotante au berceau (11), à une extrémité du berceau (11), avec possibilité de pivotement autour d'un axe (5) de rotation de moyens de prise,
- le premier moyen élastique (12) s'étendant entre l'autre extrémité du berceau (11) et les moyens de prise (10), les moyens de prise (10), le berceau (11) et le premier moyen élastique (12) étant configurés de manière à ce que les premiers moyens élastiques (12) soient comprimés lorsque les moyens de prise (10) sont déplacés de façon pivotante par rapport au berceau (11), en direction d'une position cachée,
- le mécanisme à détente brusque (14) relié au berceau (11), à une extrémité du mécanisme à détente brusque (14), les moyens de prise (10), le berceau (11), le premier moyen élastique (12) et le mécanisme à détente brusque (14) étant configurés de manière à ce que, lorsque les moyens de prise (10) reçoivent une force au-delà d'une valeur seuil de compression du premier moyen élastique (12), les moyens de prise (10) poussent le mécanisme à détente brusque (14) qui se déplace d'une première position, dans laquelle le berceau (11) maintient les moyens de prise (10), dans une position déployée, à une deuxième position dans laquelle le berceau (11) tire les moyens de prise (10) dans une position cachée pour libérer le chargement.

2. Verrou de décharge par air (1) selon la revendication 1, dans lequel le mécanisme à détente brusque (14) comprend :
- une première bielle à détente brusque (20) reliée avec possibilité de rotation à un point fixe (21) par une extrémité,
- une deuxième bielle à détente brusque (22) reliée avec possibilité de rotation à la première bielle à détente brusque (20), à l'autre extrémité de la première bielle à détente brusque (20), et reliée avec possibilité de rotation au berceau (11), les première et deuxième bielles à détente brusque (20, 22) pouvant être déplacées de manière pivotante autour d'un axe (7) de bielles.

3. Verrou de décharge par air (1) selon la revendication 2, dans lequel le mécanisme à détente brusque (14) est en outre relié à un moyen élastique de récupération (23).

4. Verrou de décharge par air (1) selon la revendication 3, dans lequel les moyens élastiques de récupération (23) sont reliés à la deuxième bielle à détente brusque (22).

5. Verrou de décharge par air (1) selon l'une quelconque des revendications précédentes 2 à 4, dans lequel la deuxième bielle à détente brusque (22) comprend deux ailes, entre lesquelles se situe la première bielle à détente brusque (20).

6. Verrou de décharge par air (1) selon l'une quelconque des revendications précédentes, comprenant un mécanisme d'enclenchement (15) destiné à bloquer le mouvement du berceau (11) vers l'arrière, en direction d'une position déployée des moyens de prise (10), dès que les moyens de prise (10) sont dans une position cachée.

7. Verrou de décharge par air (1) selon l'une quelconque des revendications précédentes, dans lequel les moyens de prise (10) comprennent un poussoir (16) d'élément de butée destiné à pousser le mécanisme à détente brusque (14), le poussoir (16) d'élément de butée pouvant être déplacé par rapport aux moyens de prise (10), de manière à ce que sa position par rapport aux moyens de prise (10) puisse être réglée.

8. Verrou de décharge par air (1) selon l'une quelconque des revendications précédentes, comprenant un mécanisme de verrouillage (17) destiné à bloquer le mouvement pivotant des moyens de prise (10) autour de l'axe (5) de rotation de moyens de prise.

9. Verrou de décharge par air (1) selon l'une quelconque des revendications précédentes, dans lequel le berceau (11) comporte un prolongement (18) apte à entrer en contact avec un verrou de berceau (19) pour pousser le prolongement (18) du berceau (11), de manière à ce que les moyens de prise (10) soient cachés.

10. Verrou de décharge par air (1) selon l'une quelconque des revendications précédentes, dans lequel le berceau (11) comprend un élément d'arrêt (30) pour les moyens de prise (10), dans la direction avant.

11. Verrou de décharge par air (1) selon l'une quelconque des revendications précédentes, comprenant un poussoir (6) destiné à pousser le mécanisme à détente brusque (14) d'une première position, dans laquelle le mécanisme à détente brusque (14) est serré, à une deuxième position dans laquelle le mécanisme à détente brusque (14) est desserré.

12. Verrou de décharge par air (1) selon les revendications 2 et 11, dans lequel le poussoir (6) actionne à proximité de la liaison de la première et de la deuxième bielle (20, 22).

13. Verrou de décharge par air (1) selon l'une quelconque des revendications précédentes, comprenant un actionneur électromécanique (31) destiné à activer les différentes modes de fonctionnement.

14. Verrou de décharge par air (1) selon la revendication 13, dans lequel l'actionneur électromécanique (31) active le moyen de verrouillage (17) en vue d'un mode verrouillé, le poussoir (6) en vue d'un mode déverrouillé, et le verrou de berceau (19) et le poussoir (6) en vue d'un mode de libération du verrou de décharge par air (1).

15. Verrou de décharge par air (1) selon l'une quelconque des revendications précédentes, dans lequel les moyens de prise (10) sont constitués d'un élément de butée.

16. Système de verrouillage aérien, **caractérisé en ce qu'**il comprend :
- une paire de rails de guidage parallèles destinés à porter des dispositifs de charge unitaire (3), susceptibles d'être déployés dans le sens longitudinal le long d'un plancher d'un aéronef,
- un verrou de décharge par air (1) selon l'une quelconque des revendications précédentes, situé dans au moins un des rails.
